# EUROPÄISCHE PATENTANMELDUNG

(11) **EP 1 571 200 A1**
(43) Veröffentlichungstag der Anmeldung: **07.09.2005**
(21) Anmeldenummer: 04017592.9
(22) Anmeldetag: 24.07.2004
(51) Int. Cl.: C12C 12/00, C12C 12/02, C12C 12/04, C12C 11/11

(54) **Bier mit verändertem Restextraktgehalt**

(30) Priorität: 04.03.2004 DE 102004011211; 16.06.2004 DE 102004028832
(71) Anmelder: Warsteiner Brauerei Haus Cramer KG, 59581 Warstein (DE)
(72) Erfinder: Möller-Hergt, Gustavo Dr., 59555 Lippstadt (DE)
(74) Vertreter: Fritz, Edmund Lothar

(57) **Zusammenfassung**

Die vorliegende Erfindung betrifft ein Verfahren zur Herstellung von Bier mit gegenüber einem Ausgangsbier verändertem Restextraktgehalt und/oder verändertem Alkoholgehalt und/oder veränderter Farbe, wobei aus dem Ausgangsbier durch Filtration ein Filtrat und ein Retentat gewonnen werden, und wobei das Retentat einen erhöhten Restextraktgehalt aufweist und anschließend unter Verwendung des Filtrats und/oder des Retentats und gegebenenfalls Wasser mindestens ein Produktbier mit einem gewünschten Restextraktgehalt und/oder einem gewünschten Alkoholgehalt und/oder einer gewünschten Farbe gewonnen wird.

## Beschreibung

Die vorliegende Erfindung betrifft ein Verfahren zur Herstellung von Bier mit gegenüber einem Ausgangsbier verändertem Restextraktgehalt und/oder verändertem Alkoholgehalt und/oder veränderter Farbe.

Nach dem Stand der Technik werden derzeit Biere mit reduziertem Restextraktgehalt entweder als Schankbiere oder als Diätbiere eingebraut. Schankbiere haben nicht nur einen geringeren Restextraktgehalt, sondern auch einen niedrigeren Alkoholgehalt. Die Herstellung von Diätbieren ist umständlich. Zunächst wird ein Diastaseauszug hergestellt aus Malz oder Maische. Bei den herkömmlichen Verfahren zur Herstellung von Diätbieren der genannten Art besteht ein erhebliches Infektionsrisiko.

Ein Verfahren zur Herstellung von Bier mit gegenüber einem Ausgangsbier verändertem Alkoholgehalt bei gleichbleibendem Restextraktgehalt ist in der DE 102 19 932 A1 beschrieben. In diesem Brauverfahren geht es darum, ein Bier mit einem erhöhten Alkoholgehalt herzustellen, wobei jedoch vermieden werden soll, dass sich gleichzeitig der Restextraktgehalt erhöht, wie dies bei den herkömmlichen Verfahren zur Herstellung von Starkbier oder Bockbier der Fall ist. Es wird also in diesem bekannten Verfahren ein Bier mit einem erhöhten Alkoholgehalt angestrebt, welches im Geschmackstyp einem trockenen Bier und der Farbe nach einem hellen Bier ähnlich ist. Um dies zu erreichen, gibt man dem Bier ein ebenfalls aus Bier gewonnenes Alkoholdestillat zu. Dadurch erhöht sich der Alkoholgehalt aber nicht der Restextraktgehalt des Produktbieres.

Nach dem Stand der Technik geschieht das Entfärben von Bier in der Regel durch Aktivkohle. Die Anwendung von Filtrationsverfahren zur Entfärbung beziehungsweise teilweisen Entfärbung von Bier ist bislang nicht üblich.

Aufgabe der vorliegenden Erfindung ist es, ein Verfahren zur Herstellung von Bier mit gegenüber einem Ausgangsbier verändertem Restextraktgehalt und/oder verändertem Alkoholgehalt und/oder veränderter Farbe zur Verfügung zu stellen, bei dem anders als bei der Herstellung eines herkömmlichen Schankbiers die drei genannten Parameter unabhängig voneinander quasi beliebig einstellbar sind. Die Lösung dieser Aufgabe liefert ein erfindungsgemäßes Verfahren zur Herstellung von Bier der eingangs genannten Gattung mit den kennzeichnenden Merkmalen des Hauptanspruchs. Ziel der vorliegenden Erfindung ist es vorrangig, aus einem Ausgangsbier beliebiger Gattung ein Produktbier zu gewinnen, dessen Restextraktgehalt geringer, gleich oder auch höher ist als derjenige des Ausgangsbiers, wobei der Alkoholgehalt des Produktbiers vorwiegend gleich oder geringer sein sollte als derjenige des Ausgangsbiers, wobei sich durch eine Veränderung des Restextraktgehalts auch eine Änderung in der Bierfarbe ergibt.

Die Lösung der erfindungsgemäßen Aufgabe liegt im Prinzip darin, dass man aus dem Ausgangsbier durch Filtration ein Filtrat und ein Retentat gewinnt, wobei das Retentat einen erhöhten Restextraktgehalt aufweist und man anschließend das Filtrat und/oder das Retentat und gegebenenfalls Wasser zur Herstellung mindestens eines Produktbiers mit einem gewünschten Restextraktgehalt und/oder einem gewünschten Alkoholgehalt und/oder einer gewünschten Farbe verwendet. Bei der erfindungsgemäßen Filtrationsmethode trennt man demnach das Ausgangsbier auf in ein Filtrat (Permeat) und in ein Retentat, wobei das Retentat einen erhöhten Restextraktgehalt aufweist, das heißt, dass sich der Restextrakt in dem Retentat quasi aufkonzentriert. Das Filtrat enthält überwiegend ein Alkohol-/Wassergemisch, wobei sich in der Regel der Alkoholgehalt gegenüber demjenigen des Ausgangsbiers und demjenigen des Retentats nicht oder nur unwesentlich ändert.

Das erfindungsgemäße Verfahren erlaubt eine Entfärbung oder eine teilweise Entfärbung des Ausgangsbiers, da im Filtrat (Permeat) der Restextraktgehalt geringer und somit auch die Farbe des Biers heller ist. Insbesondere kommt zur Entfärbung oder teilweisen Entfärbung die Verwendung eines Permeats aus einer Nanofiltration in Betracht. Das Retentat einer solchen Nanofiltration zeigt demgegenüber eine Konzentration der Bierfarbe, so dass bei der Filtration einerseits ein Bier ohne Farbe, beziehungsweise mit hellerer Farbe als die des Ausgangsbiers entsteht und andererseits bei Verwendung des Retentats Biere mit einer höheren Farbe resultieren.

Soll gemäß einer bevorzugten Variante des erfindungsgemäßen Verfahrens ein Bier mit bestimmter Farbe hergestellt werden, dann kann man dazu das Filtrat beziehungsweise Permeat einer Nanofiltration verwenden, wobei man die zunächst sehr helle Farbe zum Beispiel durch Verschneiden mit geeigneten anderen dunkleren Bierchargen wieder nachdunkeln kann, um zu einer Einstellung auf einen bestimmten Farbwert zu kommen. Man kann auch einen Teilstrom eines bei einer Nanofiltration gewonnenen Permeats mit einem Teilstrom eines Retentats verschneiden und gegebenenfalls diesem Verschnitt noch Wasser zusetzen, um ein Bier mit bestimmter Farbe herzustellen. Ein aus dem Filtrat und/oder Retentat und/oder Wasser gewonnenes Produktbier kann anschließend mit anderen Bierchargen verschnitten oder beispielsweise auch als Grundbier für Biermixgetränke genutzt werden.

Gemäß einer anderen bevorzugten Verfahrensvariante erfolgt die Herstellung eines Produktbiers mit einem gewünschten Restextraktgehalt und/oder einem gewünschten Alkoholgehalt. Dabei kann man die bei der Filtration gewonnenen Fraktionen Filtrat und Retentat oder Teilströme davon im Anschluss an die Filtration miteinander vermischen in einem beliebig einstellbaren Verhältnis, so dass man ein Produktbier mit einem entsprechend einstellbaren Restextraktgehalt erhält. Falls dies notwendig ist, kann man zusätzlich auch eine Einstellung des Alkoholgehalts vornehmen, wobei man den Alkoholgehalt beispielsweise absenken kann durch Zugabe von Wasser zu dem Gemisch oder zum Filtrat. Es kann auch gegebenenfalls nur eine Feinjustierung des Alkoholgehalts durch eine solche Wasserzugabe erfolgen.

Als Filtrationsmethode verwendet man vorzugsweise die Nanofiltration.

Das erfindungsgemäße Verfahren liefert vielfältige Möglichkeiten zur Herstellung von Bier mit verändertem Restextraktgehalt und/oder Alkoholgehalt. Beispielsweise kann man Filtrat und Retentat so miteinander verschneiden, dass ein Produktbier mit einem geringeren Restextraktgehalt, aber etwa gleichbleibenden Alkoholgehalt gegenüber dem Ausgangsbier erhalten wird. Man erhält dann eine Art Schankbier, welches kalorienärmer ist als das Ausgangsbier, wobei aber anders als bei den herkömmlichen Schankbieren der Alkoholgehalt gegenüber dem Ausgangsbier etwa unverändert sein kann. Eine andere Möglichkeit besteht darin, Filtrat und Retentat so miteinander zu verschneiden, dass ein gegenüber einem Ausgangsbier gleicher oder sogar höherer Restextraktgehalt erhalten wird, wobei der Alkoholgehalt des Produktbiers jedoch gleich oder geringer ist als derjenige des Ausgangsbiers. Es lassen sich so Biere herstellen, die kräftig sind im Geschmack, zum Beispiel ähnlich einem Bockbier, die dabei jedoch einen verringerten Alkoholgehalt aufweisen.

Eine Weiterbildung des erfindungsgemäßen Verfahrens sieht eine Mehrfachfiltration vor, wobei man mindestens einen Teilstrom des Filtrats in die Filtration zurückleiten und im Kreislauf führen kann. Ebenso kann man einen Teilstrom des Retentats mehrfach durch die Filtration führen und im Kreislauf leiten, wobei man eine zunehmende Aufkonzentrierung des Retentats erreicht. Das anschließende Vermischen von Filtrat, Retentat und/oder Wasser zur Einstellung des für das Produktbier gewünschten Restextrakt- und/oder Alkoholgehalts kann dann erfolgen, indem man jeweils einen Teilstrom des Retentats und einen Teilstrom des Filtrats dem Kreislauf entnimmt und gegebenenfalls mit Wasser in einem vorzugsweise regelbaren Mischungsverhältnis miteinander verschneidet. Dabei kann beispielsweise die Regelung derart erfolgen, dass man den Volumenstrom des Teilstroms des Retentats, welcher mit dem Filtrat und/oder Wasser verschnitten wird, in Abhängigkeit gewisser für das Produktbier erhaltener Messwerte steuert. Solche Messwerte können beispielsweise der Restextraktgehalt und/oder der Alkoholgehalts des Biers sein. Diese werden gemessen und entsprechend den jeweiligen Ergebnissen wird der Teilstrom des Retentats und/oder des Wassers, der dem Filtrat zugemischt wird, in Abhängigkeit von mindestens einem dieser Parameter gesteuert. Dadurch ist es möglich, während des laufenden Verfahrens den Restextraktgehalt und/oder den Alkoholgehalt des Produktbiers in einfacher Weise zu korrigieren, indem man beispielsweise über ein Regelventil den Teilstrom des Retentats, der mit dem Filtrat und/oder dem Wasser vermischt wird erhöht oder reduziert.

In dem erfindungsgemäßen Verfahren kommen für das Ausgangsbier eine große Bandbreite von Bieren verschiedener herkömmlicher Gattungen in Betracht, die filtriert oder unfiltriert sein können. Als Ausgangsbier kann beispielsweise auch eine angegorene Würze oder auch ein Gemisch aus einem endvergorenen Bier und einer angegorenen Würze dienen.

Eine besonders bevorzugte Variante des erfindungsgemäßen Verfahrens sieht vor, dass man jeweils einen vergleichsweise hohen Volumenstrom des Retentats innerhalb der Anlage durch die Filtration führt und im Kreislauf leitet und man jeweils nur einen demgegenüber geringeren Volumenstrom an Retentat beziehungsweise Filtrat der Anlage entnimmt. Dies hat den Vorteil, dass man durch den hohen Volumenstrom die Membran in der Nanofiltrationseinrichtung frei hält.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

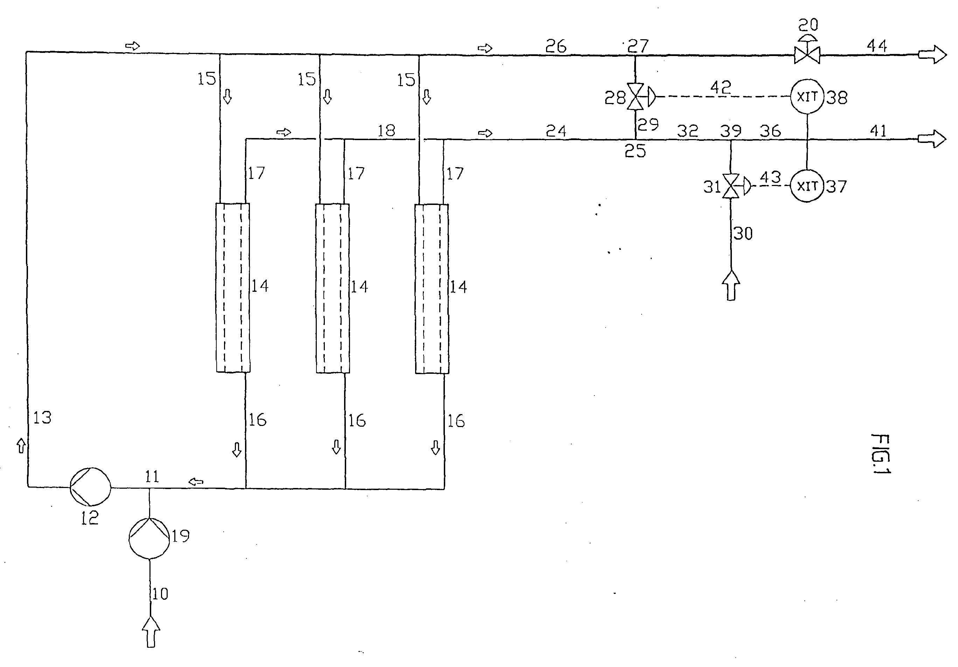

Nachfolgend wird die vorliegende Erfindung anhand eines Ausführungsbeispiels unter Bezugnahme auf die beiliegenden Zeichnungen näher erläutert. Dabei zeigt
- Fig. 1: eine vereinfachte Schemazeichnung einer beispielhaften erfindungsgemäßen Anlage zur Herstellung von Bier.

Es wird auf Fig. 1 Bezug genommen. Ein Ausgangsbier gelangt über eine Bierzulaufleitung 10 und die Zulaufpumpe 19 in die Anlage. Dabei kann es sich beispielsweise um ein filtriertes Bier mit normalem Alkohol- und Restextraktgehalt handeln, beispielsweise mit einer Stammwürze von ca. 11 % bis 12 %. Der Durchfluss des Ausgangsbiers durch diese Bierzulaufleitung 10 ist vorzugsweise regelbar. Das Ausgangsbier strömt in Pfeilrichtung über die Abzweigung 11 in die Ringleitung 13 und wird dabei mittels der Pumpe 12 in Pfeilrichtung, das heißt in der Zeichnung im Uhrzeigersinn gefördert. Aus dieser Ringleitung 13 gelangt das Ausgangsbier in die Filtrationsanlage, welche zahlreiche parallel und/oder in Reihe geschaltete Nanofiltrationsbehälter 14 umfasst, die jeweils über die von der Ringleitung 13 abzweigenden Zuführleitungen 15 gespeist werden. Das Ausgangsbier erfährt in dem Filtrationsbehälter 14 eine Nanofiltration über eine Membran, wobei das Retentat jeweils über die Ausgangsleitung 16 den Filtrationsbehälter verlässt und dann über eine Abzweigung wieder der Ringleitung 13 zugeführt wird, über die es erneut in Pfeilrichtung im Kreislauf gepumpt wird, um dann wieder in eine Zuführleitung 15 zu gelangen zur erneuten Filtration. Dieser Vorgang wiederholt sich im Prinzip ständig, wobei durch einen hohen Volumenstrom in der Ringleitung 13 verhindert wird, dass sich die Membran in der Nanofiltrationsvorrichtung zusetzt. Das Filtrat verlässt die Filtrationsbehälter 14 jeweils über die Ausgangsleitung 17 und gelangt von dort in eine Sammelleitung 18 für das Filtrat, wobei von jedem der Nanofiltrationsbehälter 14 über je eine Ausgangsleitung 17 und je einen Abzweig Filtrat der Sammelleitung 18 zugeführt wird. Das Filtrat verlässt über die Sammelleitung 18 die Nanofiltrationseinheit und gelangt über die Leitung 24 zu dem Abzweig 25. An dem Abzweig 25 erfolgt die Vermischung mit einem Teilstrom des Retentats, welcher dem Retentatablauf 26 über den Abzweig 27 entnommen wird. Diese Entnahme des Teilstroms des Retentats erfolgt durch das Regelventil 28 in die Zweigleitung 29, die zu dem Abzweig 25 führt, an dem die Vermischung mit dem Filtrat erfolgt. Die Regelungseinrichtung mit dem Regelventil 28 ist dabei vorgesehen, um den Teilstrom des Retentats, welcher in die Zweigleitung 29 gelangt, einzustellen, und zwar in Abhängigkeit von gewissen Parametern, die für das Produktbier gemessen werden, wie nachfolgend noch näher erläutert wird.

Das durch Verschneiden des Filtrats mit dem Retentat gewonnene Produktbier gelangt dann über die Leitung 32 zum Abzweig 39. Es ist eine Zuleitung 30 für Wasser vorgesehen, welches in Pfeilrichtung zu einer Einstellvorrichtung 31 strömt, mittels derer am Abzweig 39 eine Einstellung des Alkoholgehalts des Produktbiers dadurch möglich ist, dass eine Verdünnung mit Wasser aus der Zuleitung 30 erfolgt. Diese Einstellung kann auch lediglich eine Feineinstellung des Alkoholgehalts sein, da der Alkoholgehalt des Filtrats nicht unbedingt wesentlich von demjenigen des Ausgangsbiers abweicht.
Das Produktbier strömt weiter über die Leitung 36 zu den Messeinheiten 37, 38, an denen verschiedene Parameter des Produktbiers gemessen werden können. Diese Messeinheiten 37, 38 umfassen unter anderem eine Vorrichtung für die Bestimmung des Restextrakts und eine Vorrichtung für die Bestimmung des Alkoholgehalts im Produktbier. Das Produktbier gelangt dann über die Leitung 41 zum Produktauslauf, an dem das Produktbier die Anlage verlässt. Die durch die Messvorrichtungen 37, 38 erhaltenen Messwerte für Restextraktgehalt und Alkoholgehalt des Produktbiers können über die Steuerleitung 42 und 43 zu den Regelventilen 28, 31 geleitet werden, so dass dort der Volumenteilstrom des Retentats und/oder des Wassers, der zum Mischen mit dem der Anlage entnommenen Teilstrom des Filtrats vorgesehen ist, eingestellt werden kann, in Abhängigkeit von den für das Produktbier erhaltenen Messwerten. Das überschüssige Retentat, welches stark aufkonzentriert ist, kann die Anlage über die Leitung 44 und das Regelventil 20 verlassen.

### Bezugszeichenliste

- 10: Bierzulaufleitung
- 11: Abzweigung
- 12: Pumpe
- 13: Ringleitung
- 14: Nanofiltrationsbehälter
- 15: Zuführleitungen
- 16: Ausgangsleitung
- 17: Ausgangsleitung
- 18: Sammelleitung
- 19: Zulaufpumpe
- 20: Regelventil
- 24: Leitung
- 25: Abzweig
- 26: Retentatablauf
- 27: Abzweig
- 28: Regelventil
- 29: Zweigleitung
- 30: Zuleitung
- 31: Einstellvorrichtung
- 32: Leitung
- 33: Abzweig
- 36: Leitung
- 37: Messeinheit
- 38: Messeinheit
- 39: Abzweig
- 41: Leitung
- 42: Steuerleitung
- 43: Steuerleitung
- 44: Leitung

## Patentansprüche

1. Verfahren zur Herstellung von Bier mit gegenüber einem Ausgangsbier verändertem Restextraktgehalt und/oder verändertem Alkoholgehalt und/oder veränderter Farbe, **dadurch gekennzeichnet, dass** aus dem Ausgangsbier durch Filtration ein Filtrat und ein Retentat gewonnen werden, wobei das Retentat einen erhöhten Restextraktgehalt aufweist und anschließend unter Verwendung des Filtrats und/oder des Retentats und gegebenenfalls Wasser mindestens ein Produktbier mit einem gewünschten Restextraktgehalt und/oder einem gewünschten Alkoholgehalt und/oder einer gewünschten Farbe gewonnen wird.

2. Verfahren nach Anspruch 1, **dadurch gekennzeichnet, dass** Filtrat und Retentat so miteinander verschnitten werden, dass ein Produktbier mit einem geringeren oder einem höheren Restextraktgehalt als der des Ausgangsbieres erhalten wird.

3. Verfahren nach Anspruch 1 oder 2, **dadurch gekennzeichnet, dass** Filtrat und Retentat so miteinander verschnitten werden, dass ein Produktbier mit einem gegenüber dem Ausgangsbier gleichen oder reduzierten Alkoholgehalt erhalten wird.

4. Verfahren nach einem der Ansprüche 1 bis 3, **dadurch gekennzeichnet, dass** Filtrat und Retentat durch Nanofiltration gewonnen werden.

5. Verfahren nach einem der Ansprüche 1 bis 4, **dadurch gekennzeichnet, dass** ein Teilstrom des Retentats mehrfach durch die Filtration geführt und im Kreislauf geleitet wird.

6. Verfahren nach einem der Ansprüche 1 bis 5, **dadurch gekennzeichnet, dass** ein Teilstrom des Retentats und ein Teilstrom des Filtrats in einem vorzugsweise regelbaren Mischungsverhältnis miteinander verschnitten werden.

7. Verfahren nach einem der Ansprüche 1 bis 6, **dadurch gekennzeichnet, dass** der Volumenstrom des Teilstroms des Retentats, welcher mit dem Filtrat verschnitten wird in Abhängigkeit von für das Produktbier erhaltenen Messwerten gesteuert wird.

8. Verfahren nach Anspruch 7, **dadurch gekennzeichnet, dass** als Messwerte des Produktbiers mindestens der Restextraktgehalt und/oder der Alkoholgehalt des Produktbiers gemessen und der Teilstrom des Retentats und gegebenenfalls des Wassers der dem Filtrat zugemischt wird, mindestens über diese Parameter gesteuert wird.

9. Verfahren nach einem der Ansprüche 1 bis 8, **dadurch gekennzeichnet, dass** das Ausgangsbier ein unfiltriertes oder filtriertes Bier einer herkömmlichen Gattung ist.

10. Verfahren nach einem der Ansprüche 1 bis 9, **dadurch gekennzeichnet, dass** das Ausgangsbier eine angegorene Würze oder ein Gemisch aus einem endvergorenen Bier und angegorener Würze ist.

11. Verfahren nach einem der Ansprüche 1 bis 10, **dadurch gekennzeichnet, dass** der Alkoholgehalt des Produktbiers vor oder nach dem Vermischen von Filtrat und Retentat durch Zugabe von Wasser justiert wird.

12. Verfahren nach einem der Ansprüche 1 bis 11, **dadurch gekennzeichnet, dass** ein vergleichsweise hoher Volumenstrom innerhalb der Anlage durch die Filtration geführt und im Kreislauf geleitet und ein demgegenüber geringerer Volumenstrom an Produktbier der Anlage entnommen wird.

13. Verfahren nach einem der Ansprüche 1 bis 12, **dadurch gekennzeichnet, dass** ein Filtrat zur Herstellung eines Biers mit gegenüber einem Ausgangsbier hellerer Farbe verwendet wird.

14. Verfahren nach einem der Ansprüche 1 bis 13, **dadurch gekennzeichnet, dass** ein Filtrat mit gegenüber einem Ausgangsbier hellerer Farbe anschließend durch ebenfalls aus Bier gewonnene färbende Zusätze dunkler gefärbt wird.

15. Verfahren nach einem der Ansprüche 1 bis 14, **dadurch gekennzeichnet, dass** ein Filtrat (Permeat) oder ein Retentat als Verschnitt mit Wasser zur Herstellung eines Produktbiers mit bestimmter Farbe verwendet wird.

16. Verfahren nach einem der Ansprüche 1 bis 14, **dadurch gekennzeichnet, dass** ein Filtrat (Permeat) mit einem Retentat verschnitten und zur Herstellung eines Biers mit bestimmter Farbe verwendet wird.

17. Verfahren nach einem der Ansprüche 1 bis 14, **dadurch gekennzeichnet, dass** ein Filtrat (Permeat) und/oder ein Retentat aus einer Nanofiltration mit einer anderen Biercharge verschnitten und zur Herstellung eines Produktbiers verwendet wird.

18. Verfahren nach einem der Ansprüche 1 bis 14, **dadurch gekennzeichnet, dass** ein Filtrat (Permeat) und/oder ein Retentat als Grundbier zur Herstellung für ein Biermixgetränk verwendet wird.
